# EUROPÄISCHE PATENTSCHRIFT

(11) **EP 0 414 926 B1**
(45) Veröffentlichungstag und Bekanntmachung des Hinweises auf die Patenterteilung: **02.03.1994**
(21) Anmeldenummer: 89115847.9
(22) Anmeldetag: 28.08.1989
(51) Int. Cl.: H02K 9/19, H02K 9/00

(54) **Antrieb eines langsam laufenden Rotors einer Arbeitsmaschine**
Drive of a slow running rotor of a working machine
Entraînement d'un rotor à faible vitesse d'une machine à travailler

(43) Veröffentlichungstag der Anmeldung: 06.03.1991
(73) Patentinhaber: SIEMENS AKTIENGESELLSCHAFT, 80333 München (DE)
(72) Erfinder: Spirk, Franz, D-1000 Berlin 13 (DE); Jordan, Martin, D-8520 Erlangen (DE)

(56) Entgegenhaltungen:
- EP-A- 0 342 554
- DE-A- 3 247 888
- DE-C- 335 201
- DE-C- 761 310
- FR-A- 1 556 113
- GB-A- 2 199 081
- US-A- 2 648 789
- US-A- 2 804 404

## Beschreibung

Die Erfindung betrifft einen Antrieb mit den Merkmalen des Oberbegriffs des Anspruchs 1.

Für den Antrieb langsam laufender Arbeitsmaschinen ist es bekannt, Synchron- oder Asynchron-Außenläufermotoren mit einem äußeren Rotormantel und innerer Statorachse einzusetzen. Der Einsatz erfolgt überwiegend da, wo die Drehzahl der angetriebenen Maschine verhältnismäßig niedrig ist und ein großes Drehmoment verlangt wird. Vorteilhaft ist dabei die Einsparung eines Getriebes, eine vereinfachte Lagerung und, besonders im untertägigen Bergbau wichtig, eine erhebliche Platzersparnis.

Einen Außenläufer-Seilscheibenantrieb, der als Synchron- oder als Asynchronantrieb ausgebildet sein kann, zeigt die DE-AS 10 95 485. Da es sich hier um einen Antrieb mit häufigen Stillstandszeiten handelt, der thermisch nur gering belastet ist, ist keine gezielte Kühlung des Antriebs vorgesehen, die Kühlung erfolgt durch die Rotorscheiben-Außenwand.

Einen weiterentwickelten, kreislaufgekühlten Synchron-Außenläufermotor zum Antrieb des Schaufelrades eines Großraumbaggers im Tagebau zeigt die DE 32 47 888 A1, die eine Luftkühlung des Antriebs durch im Kreislauf strömende, über einen Wärmetauscher rückgekühlte, Luft vorsieht. Dieser bekannte Antrieb, der den Ausgangspunkt der vorliegenden Entwicklung darstellt, löst das Problem der Kühlung langsam laufender Synchron-Außenläufermotoran bereits zufriedenstellend.

Aus der DE-C-335 201 ist ein Antrieb bestehend aus einem äußeren Rotor und einem inneren Stator bekannt, wobei der innenliegende Stator mit seiner Statorwicklung ganz in einem Gehäuse eingeschlossen ist, das aus zwei Endschilden und einer zwischen diesen im Luftspalt zwischen dem Stator und dem Rotor angeordneten Hülle besteht. Das Gehäuse enthält ein flüssiges Kühlmittel, das in einem geschlossenen Kühlmittelkreislauf geführt ist und den Stator umströmt. Eine Kühlung des Rotors, der mit einem äußeren Rotormantel und bis zur Statorachse reichenden Seitenwänden ebenfalls ein Gehäuse bildet, ist nicht vorgesehen.

Aus der US-A-2 648 789 ist ein Antrieb mit einem äußeren Rotor und einem inneren Stator bekannt, wobei der Rotormantel mit zwei bis zur Statorachse reichenden Seitenwänden ein Gehäuse bildet, in dem eine begrenzte Menge eines flüssigen Kühlmittels enthalten ist. Bei ausreichend hoher Rotordrehzahl bildet das Kühlmittel einen an der Innenwand des Rotormantels anliegenden und mitrotierenden Flüssigkeitsring aus dem mit Hilfe von Leitelementen an dem Stator ein Teil des Kühlmittels abgeleitet und dem Stator zugeführt wird. Zur äußeren Luftkühlung des Antriebs ist der Rotor außen mit Leitschaufeln versehen und bildet so ein Gebläse. Die Flüssigkeitskühlung und die Luftkühlung sind somit nur bei ausreichend hohen Drehzahlen wirksam.

Der Erfindung liegt die Aufgabe zugrunde, eine wirksame Kühlung bei langsam laufenden Antrieben, insbesondere für Bergbau-Untertage-Einsätze, zu erreichen.

Gemäß der Erfindung wird die Aufgabe durch die Merkmale des Anspruchs 1 gelöst.

Durch die Flüssigkeitskühlung der Statorwicklung wird vorteilhaft eine sichere Wärmeableitung aus dem stillstehenden Bereich des Antriebs erreicht. Eine Flüssigkeitskühlung des rotierenden Teils des Antriebs würde wegen des notwendigen großen Durchmessers der Wasserzuführung in den rotierenden Teil große Schwierigkeiten bereiten und wäre sehr kostenaufwendig. Für den Rotor ist daher eine Umluftkühlung vorgesehen, die aber im Vergleich zu einer Luftkühlung der gesamten Maschine nur die ca. halbe Luftmenge und einen entsprechend geringeren Platzbedarf erfordert. Da die Kühlmittel in geschlossenen Kühlmittelkreisläufen geführt werden, ergibt sich eine an die Erfordernisse des untertägigen Bergbaus angepaßte Ausbildung des Antriebs, die eine von Ablagerungen freie Kühlung ermöglicht. Insgesamt ergibt sich durch die Kombination einer Wasserkühlung des Stators mit einer Luftkühlung für den Rotor und den Stator eine gut wirksame Kühlung des Antriebs, bei der für eine sichere Abführung der Verlustwärme aus dem Antrieb gesorgt ist. Dabei kann sowohl die Gas- als auch insbesondere die Flüssigkeitskühlmittelmenge überraschend gering sein.

In weiterer Ausgestaltung der Erfindung ist vorgesehen, daß, wie dies an sich aus der DE-C-761 310 bekannt ist, die Statorwicklung in mehrere, der Anzahl der Teilfugen entsprechende, geschlossene Bereiche von Spulen unterteilt ist, die nur in den zwischen den Teilfugen befindlichen Nuten liegen. So wird die Montierbarkeit beim Aufbau oder beim Umsetzen der Arbeitsmaschine erheblich verbessert. Weiterhin kann vorgesehen werden, daß bei den der Teilfuge benachbarten, nur mit einer Spulenseite belegten Nuten, der Luftspalt vergrößert ist. So können die ungünstigen zusätzlichen magnetischen Kraftwirkungen verringert werden.

Der Synchronmotor muß für seinen Einsatz als Einheit mit seinem Stromrichter angesehen werden. Für diesen ist eine Siedebadkühlung, wie sie beispielsweise aus der GB-A-2 199 081 bekannt ist, besonders vorteilhaft, da diese höchste Kühlwirkung und kleinste Abmessungen miteinander vereinigt. Insgesamt ergibt sich für den Antrieb, bestehend aus den beiden Teilen Außenläufer-Synchronmotor und Stromrichter, durch diese Kombination eine bisher unerreicht günstige Gesamtausbildung, die auch unter härtesten Untertage-Einsatzbedingungen zuverlässig arbeitet und dabei den geringst möglichen Platzbedarf aufweist.

Weitere Vorteile und Einzelheiten der Erfindung ergeben sich aus der nachfolgenden Beschreibung eines Ausführungsbeispiels anhand der Zeichnung und in Verbindung mit den Unteransprüchen.
Es zeigt:
- FIG 1: ein erfindungsgemäß gekühltes Rotor-Statorsystem,
- FIG 2: eine Kühlkanalanordnung in Seitenansicht,
- FIG 3: einen Schnitt durch einen Kühlkanalanordnung entsprechend FIG 2 und
- FIG 4: einen Schnitt durch eine Kühlkanalanordnung mit mittigem Kühlkanalverlauf.

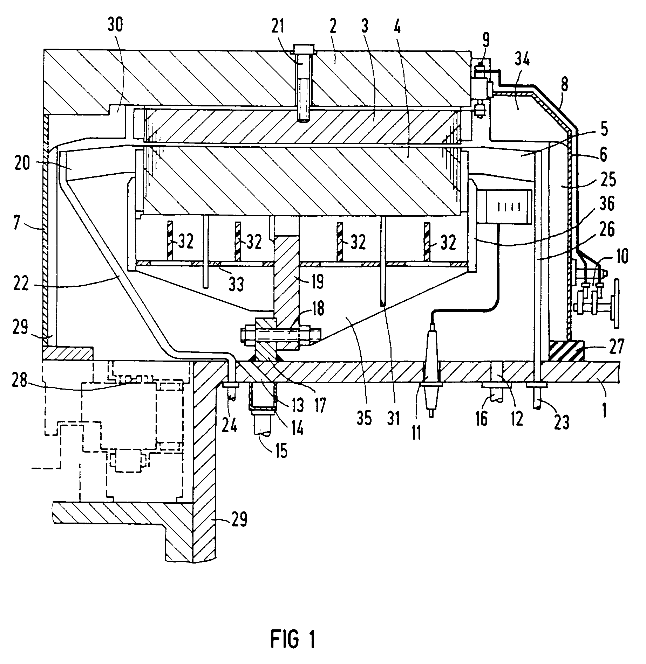

In FIG 1 der Zeichnung bezeichnet 1 die Statorwelle und 2 den Rotormantel. Innen am Rotormantel 2 befinden sich die Pole 3 des Rotors. Die Pole 3 des Rotors sind über Schrauben 21 mit dem Rotormantel 2 verschraubt. Die Anzahl der Schrauben je Pol 3 beträgt vorzugsweise drei, wie dies durch die eingezeichneten Aufnahmeöffnungen für die Schraubenköpfe angedeutet ist. Die mittleren Schrauben 21 weisen vorteilhaft jeweils eine Scherbuchse auf. Die Statorwicklungen 4 sind durch Tragelemente 33, 36 über das Mittelelement 19 vorteilhaft einfach mit Schrauben 18 und dem Flansch 17 mit der Statorwelle 1 verbunden. Der Flansch 17 ist dabei vorteilhaft einfach mit der Statorwelle 1 verschweißt. Insgesamt ergibt sich eine kostengünstige und leichte Befestigung der Statorwicklungen 4, die auch einen ungehinderten Zutritt des gasförmigen Kühlmediums zu dem Statorblechpaket 4 erlaubt.

Seitlich um den erfindungsgemäßen Antrieb herum erstreckt sich das Gehäuse mit den Seitenwänden 6 und 7, die zusammen mit der Statorachse 1 und dem Rotormantel 2 einen abgeschlossenen Kühlraum bilden und in den das gasförmige Kühlmittel geführt wird.

Der Zuführung von flüssigen Kühlmedium zu den Statorwicklungen 4 dienen die rohrförmigen Leitorgane 22 und 26, die über Stutzen 23 und 24 entweder mit einem Wärmetauscher oder direkt über einen mechanischen Feinfilter mit der Wasserversorgung verbunden sind.

Das Elektrokabel 43 für den Antrieb wird über die Durchführung 11 durch die Statorwelle 1 geführt. Die Ausbildung der Rotorpole 3 und der Statorwicklungen 4 sowie die übrige elektrotechnische Ausgestaltung, ist ebenso wie die Ausbildung der Wicklungsköpfe 5 und 20 der Statorwicklungen 4 konventionell. Dies gilt auch für die Stromzuführung des Rotors über die Durchführung 9 und die Bürstenanordnung 10, zwischen denen sich die Leitung 8 erstreckt. Die Leitung 8 und die Bürstenanordnung 10 befinden sich außerhalb des Gehäuses für das gasförmige Kühlmedium, um die Überwachung und Wartung zu erleichtern.

Die Statorwicklungen 4 sind in mehrere, einer Anzahl von Teilfugen entsprechende Bereiche von geschlossenen Spulen unterteilt, die nur in zwischen Teilfugen befindlichen Nuten liegen. Bei den der Teilfuge benachbarten, nur mit einer Spulenseite belegten Nuten ist der Luftspalt vergrößert.

Der Stator 4 ist über einen Flanschträger 19 und Schrauben 18 sowie über einen Flansch 17 mit der Statorachse 1 verbunden. An ihrer Innenseite befinden sich die Trageelemente 32 und 33, die eine Innenkühlung des Blechpaketes durch das gasförmige Kühlmittel erlauben. Das gleiche gilt für die Stege 35 und Seitenhalterungen 36. Die Statorwelle 1 ist arbeitsseitig durch einen Abschlußflansch 31 verschlossen, an den sich die Lagerung für den Arbeitskopf des Antriebs anschließt. Der Arbeitskopf und seine Lagerung ist ebensowenig wie die Dichtungen 27 und 28 des Gehäuses Gegenstand der Erfindung. Das gleiche gilt für die um den Antrieb herum angeordneten und nicht gezeichneten Teile der Arbeitsmaschine, die den jeweiligen, unterschiedlichen Aufgaben angepaßt werden.

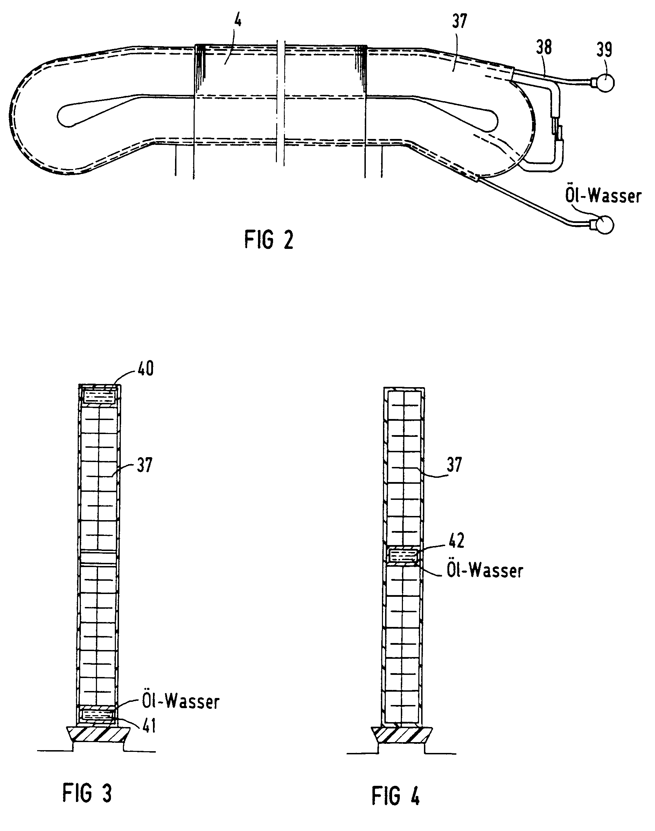

In FIG 2 bezeichnet 37 eine Statorwicklung, die mit Zuleitungsorganen 38 und 39 für das flüssige Kühlmedium verbunden ist. Wie sich aus FIG 3 und FIG 4 ergibt, können die Kühlkanäle 40, 41 und 42 sowohl außen und innen als auch in der Mitte der Statorwicklung 37 angeordnet sein.

Die elektrischen Teile des Motors sind vorteilhaft durch eine unter Vakuum durchgeführte Kunstharz-Ganztränkung versiegelt. So ergibt sich eine besonders bergbaugerechte Ausführung des Antriebs.

Der zusammen mit dem Antrieb als elektrische Einheit zu betrachtende Stromrichter ist als Siedebad-Kühlaggregat ausgebildet. Sein genauer Aufbau ist aus "Glasers Analen" 113. Jahrgang, Heft 2, 1989, Seiten 50 bis 57 zu ersehen (Siemens Sonderdruck). Entsprechend ausgerüstete Stromrichter sind schon aus der Lokomotivtechnik bekannt. Ihre spezifischen Eigenschaften machen sie jedoch auch vorteilhaft für Antriebe an Arbeitsmaschinen unter Tage ohne Änderungen einsetzbar. Insgesamt ergibt sich durch die Erfindung eine neue, insbesondere im untertätigen Bergbau besonders günstig einsetzbare Antriebseinheit, die besonders betriebssicher bei kompaktester Ausführung arbeitet. Die Rückkühlung kann dabei je nach Verfügbarkeit durch Kühlwasser oder Kühlluft, unter Umständen auch durch die normale Bewetterung erfolgen. So ist ein universeller Einsatz unter Tage möglich.

Die Siedebad-Kühlung des Stromrichters ist für diesen besonders geeignet und bereits eingehend erprobt. Sie kann auch in thermisch besonders hochbeanspruchten Bereichen des Außenläufermotors direkt eingesetzt werden. Die Rückkühlung erfolgt dann ebenfalls durch das gasförmige Kühlmedium. So kann sich eine weitere Verkleinerung des Antriebs ergeben, ohne daß die Kühlleistung herabgesetzt wird. Dies gilt sowohl für die Verwendung der erfindungsgemäßen Kühlung in der beschriebenen Form als Synchronmotor als auch in der nicht beschriebenen Form des Asynchronmotors.

## Patentansprüche

1. Aus Rotor und Stator bestehender Antrieb einer langsam laufenden Arbeitsmaschine, insbesondere im Bergbau, z.B. eines Baggerschaufelrades, einer Tunnelbohrmaschine, eines Fräskopfes etc., mit äußerem Rotormantel (2) und innerer Statorachse (1), die die Statorwicklung (4) trägt, wobei
der Rotormantel (2) durch Seitenwände (6, 7) abgeschlossen ist, die bis zur Statorachse (1) oder deren Lager nach innen reichen und zusammen mit dem Rotormantel (2) und der Statorachse (1) ein Gehäuse bilden, das von einem gasförmigen, in einem geschlossenen Kühlmittelkreislauf geführten und den Rotor und den Stator umströmenden Kühlmedium durchströmt wird, dadurch gekennzeichnet, daß in dem Gehäuse rohrförmige Leitorgane (22,26) von der Statorachse (1) zu geschlossenen Kühlkanälen (40,41,42) in der Statorwicklung (4) führen, in denen ein flüssiges Kühlmittel in einem weiteren geschlossenen Kühlmittelkreislauf geführt ist.

2. Antrieb nach Anspruch 1, **dadurch gekennzeichnet,** daß die Statorwicklung (4) in mehrere, der Anzahl der Teilfugen entsprechende, geschlossene Bereiche von Spulen unterteilt ist, die nur in den zwischen den Teilfugen befindlichen Nuten liegen.

3. Antrieb nach Anspruch 2, **dadurch gekennzeichnet,** daß bei den der Teilfuge benachbarten, nur mit einer Spulenseite belegten, Nuten der Luftspalt vergrößert ist und daß die Vergrößerung des Luftspalts zur Teilfuge hin zunimmt.

4. Antrieb nach Anspruch 1,2 oder 3, **dadurch gekennzeichnet,** daß von den Rotorpolen (3) Kanäle gebildet werden, durch die das gasförmige Kühlmedium strömt.

5. Antrieb nach Anspruch 1,2,3 oder 4, **dadurch gekennzeichnet,** daß in dem Gehäuse schaufelförmige Leitorgane, insbesondere aus Kunststoff, für das gasförmige Kühlmittel angeordnet sind.

6. Antrieb nach einem der vorhergehenden Ansprüche, **dadurch gekennzeichnet,** daß als flüssiges Kühlmittel Wasser oder Öl verwendet wird.

7. Antrieb nach einem der vorhergehenden Ansprüche, **dadurch gekennzeichnet,** daß er einer Vakuum-Ganztränkung mit Kunststoff, vorzugsweise Epoxydharz, unterzogen ist.

8. Antrieb nach einem der vorhergehenden Ansprüche, **dadurch gekennzeichnet,** daß zur Speisung des Synchronmotors ein in der Nähe angeordneter, mit ihm eine elektrische Einheit bildender, Stromrichter mit einer Siedebad-Kühlung verwendet wird.

## Claims

1. Drive of a slowly running working machine, the drive comprising rotor and stator, in particular in the mining industry, for example of a dredging bucket wheel, of a boring machine for tunnels, of a milling head etc., with external rotor casing (2) and inner stator shaft (1), which carries the stator winding (4), wherein the rotor casing (2) is sealed by side walls (6, 7) which reach as far as the stator shaft (1) or its bearing to the inside and form together with the rotor casing (2) and the stator shaft (1) a housing, through which a gaseous cooling medium flows which is guided in a closed coolant circuit and flows around the rotor and the stator, characterized in that in the housing tubular conducting parts (22, 26) lead from the stator shaft (1) to closed cooling ducts (40, 41, 42) in the stator winding (4), in which a liquid coolant is guided in a further closed coolant circuit.

2. Drive according to claim 1, characterized in that the stator winding (4) is divided into several closed regions of coils corresponding to the number of joints, which coils only lie in the grooves located between the joints.

3. Drive according to claim 2, characterized in that with the grooves being adjacent to the joint and only covered with one side of a coil the air gap is enlarged and in that the enlargement of the air gap increases towards the joint.

4. Drive according to claim 1, 2 or 3, characterized in that ducts are formed by the rotor poles (3), through which ducts the gaseous cooling medium flows.

5. Drive according to claim 1, 2, 3 or 4, characterized in that bucket-shaped conducting parts for the gaseous coolant, in particular of plastic, are arranged in the housing.

6. Drive according to one of the preceding claims, characterized in that water or oil is used as liquid coolant.

7. Drive according to one of the preceding claims, characterized in that it is subjected to total vacuum impregnation with plastic, preferably epoxide resin.

8. Drive according to one of the preceding claims, characterized in that to feed the synchronous motor a converter, with boiling-bath cooling, arranged in the vicinity and forming an electrical unit with it is used.

## Revendications

1. Dispositif d'entraînement, constitué par un rotor et un stator, d'une machine de travail fonctionnant lentement, notamment dans l'exploitation minière, par exemple un excavateur à godets, un tunnelier, une tête de fraisage, etc., comportant une enveloppe extérieure formant rotor (2) et un axe intérieur formant stator (1), qui porte l'enroulement statorique (4), et dans lequel l'enveloppe (2) du rotor est fermée par des parois latérales (6, 7), qui s'étendent vers l'intérieur jusqu'à l'arbre (1) formant stator ou jusqu'à ses paliers et forment, conjointement avec l'enveloppe (2) formant rotor et l'arbre (1) formant stator, un carter, qui est rempli par un fluide de refroidissement, qui est guidé dans un circuit de refroidissement fermé et circule autour des parties importantes du moteur, qui dégagent de la chaleur, caractérisé par le fait que dans le carter, des organes tubulaires de guidage (22, 26) s'étendent depuis l'axe formant stator (1) jusqu'à des canaux fermés de refroidissement (40, 41, 42) situés dans l'enroulement statorique (4) et dans lesquels un fluide de refroidissement liquide circule dans un autre circuit fermé.

2. Dispositif d'entraînement suivant la revendication 1, caractérisé par le fait que l'enroulement statorique (4) est subdivisé en plusieurs parties, qui correspondent à un certain nombre de joints de séparation, de bobines fermées qui sont situées uniquement dans les encoches présentes entre les joints de séparation.

3. Dispositif d'entraînement suivant la revendication 2, caractérisé par le fait que dans le cas des rainures qui sont voisines du joint de séparation et sont occupées uniquement par un côté des bobines, l'entrefer est accru et l'accroissement de l'entrefer augmente en direction du joint de séparation.

4. Dispositif d'entraînement suivant la revendication 1, 2 ou 3, caractérisé par le fait que les pôles (3) du rotor définissent des canaux dans lesquels circule le fluide de refroidissement gazeux.

5. Dispositif d'entraînement suivant la revendication 1, 2, 3 ou 4, caractérisé par le fait que des organes de guidage en forme d'aubes, notamment en matière plastique, pour le fluide de refroidissement gazeux sont disposés dans le carter.

6. Dispositif d'entraînement suivant l'une des revendications précédentes, caractérisé par le fait qu'on utilise de l'eau ou de l'huile comme fluide de refroidissement liquide.

7. Dispositif d'entraînement suivant l'une des revendications précédentes, caractérisé par le fait qu'il est soumis à une imprégnation complète sous vide avec une matière plastique, de préférence une résine époxy.

8. Dispositif d'entraînement suivant l'une des revendications précédentes, caractérisé par le fait que pour l'alimentation du moteur synchrone, on utilise un convertisseur statique qui est disposé à proximité du moteur et forme avec lui une unité électrique et qui comporte un refroidisseur à bain à ébullition.
